# EUROPEAN PATENT SPECIFICATION

(11) **EP 3 147 206 B1**
(45) Date of publication and mention of the grant of the patent: **06.11.2019**
(21) Application number: 16190075.8
(22) Date of filing: 22.09.2016
(51) Int. Cl.: B64C 21/06

(54) **ACTIVE LAMINAR FLOW CONTROL SYSTEM WITH DRAINAGE**
AKTIVES LAMINARSTRÖMUNGSSTEUERUNGSSYSTEM MIT DRAINAGE
SYSTÈME DE CONTRÔLE DE FLUX LAMINAIRE ACTIF AVEC DRAINAGE

(30) Priority: 22.09.2015 US 201514861767
(43) Date of publication of application: 29.03.2017
(73) Proprietor: Rohr, Inc., Chula Vista, CA 91910-2098 (US)
(72) Inventor: PUJAR, Vijay V., San Diego, CA 92127 (US); BROWN, Keith T., Bonita, CA 91902 (US)
(74) Representative: Dehns

(56) References cited:
- EP-A1- 3 093 236
- US-A- 4 749 150
- US-A- 6 068 328

## Description

### BACKGROUND OF THE INVENTION

### 1. Technical Field

This disclosure relates generally to an aircraft propulsion system and, more particularly, to a nacelle for an aircraft propulsion system and a system for promoting laminar flow over portions of the nacelle to reduce drag.

### 2. Background Information

It is generally known that laminar flow over an aerodynamic surface, such as an outer surface of a nacelle of an aircraft propulsion system, reduces drag compared to turbulent flow over the same surface. To promote such laminar flow, various active laminar flow control (ALFC) systems have been conceptually developed. Such an ALFC system may include a plenum duct positioned at least partly inside of the nacelle. This plenum duct is fluidly coupled with perforations in the outer surface. The plenum duct is also fluidly coupled with a suction means, which draws air into the plenum duct through the perforations in the outer surface in order to modify airflow over the outer surface. This modification generally removes low energy air from a boundary layer along an extent of the outer surface to prevent that boundary layer from thickening and eventually tripping into a turbulent flow.

While ALFC systems have various known advantages, these systems are typically difficult to commercially implement due to various deficiencies. There is a need in the art therefore for an improved active laminar flow control (ALFC) system. US 6068328 describes a vehicular boundary layer control system and method. EP 3093236 A1 describes a system for an aircraft propulsion system.

### SUMMARY OF THE DISCLOSURE

According to the invention, a nacelle is provided for an aircraft propulsion system. This nacelle includes the features of claim 1.

Another nacelle is described for an aircraft propulsion system. This nacelle includes a nacelle inlet and an active laminar flow control system. The nacelle inlet includes an inner barrel and an outer barrel circumscribing the inner barrel. The inner barrel includes a sound attenuating acoustic panel. The active laminar flow control system includes a plurality of arrays of perforations in the outer barrel, a suction source and a drain mechanism. The suction source is fluidly coupled with the arrays of perforations. The drain mechanism is fluidly coupled with and between at least one of the arrays of perforations and the suction source.

Another nacelle is also described for an aircraft propulsion system. This nacelle includes a nacelle inlet and an active laminar flow control system. The nacelle inlet includes an inner barrel and an outer barrel circumscribing the inner barrel. The inner barrel includes a sound attenuating acoustic panel. The active laminar flow control system includes an array of perforations in the outer barrel, a suction device, a drain mechanism and a controller. The suction source is fluidly coupled with the array of perforations. The drain mechanism is fluidly coupled with and between the array of perforations and the suction source. The controller is configured to synchronize actuation of the drain mechanism with operation of the suction source.

The nacelle inlet may include a noselip at the leading edge, an inner barrel coupled to the inner diameter of the noselip, and an outer barrel circumscribing the inner barrel and coupled to the outer diameter of the noselip. The noselip and outer barrel may be separate pieces attached together, or may be integrated together to form a one piece noselip and outer barrel (an extended noselip or inlet).

The drain mechanism may be fluidly coupled with and between each of the arrays of perforations and the suction source.

The drain mechanism may include or be configured as a passive drain mechanism. The drain mechanism may alternatively include or be configured as an active drain mechanism. This active drain mechanism is actuated based on the operation of the suction source.

The drain mechanism is configured to close where the suction source is operational.

The drain mechanism is configured to open where the suction source is non-operational.

The drain mechanism may include or be configured as a flapper valve. The flapper valve may include a flap and a biasing device configured to bias the flap in an open position.

The drain mechanism may be electronically synchronized with the suction source such that the drain mechanism is open where the suction source is non-operational and such that the drain mechanism is closed where the suction source is operational.

The active laminar control system may include a plenum and a conduit. The plenum may be configured with the outer barrel and is fluidly coupled with the array of perforations. The conduit may fluidly couple the plenum with the suction source. The drain mechanism may be configured with the plenum.

The active laminar control system may include a plenum and a conduit. The plenum may be configured with the outer barrel and is fluidly coupled with the array of perforations. The conduit may fluidly couple the plenum with the suction source. The drain mechanism may be configured with the conduit.

The active laminar control system may include a second array of perforations in the outer barrel which are fluidly coupled with the suction source. The drain mechanism may be fluidly coupled with and between the second array of perforations and the suction source.

The active laminar control system may include a second array of perforations in the outer barrel, a second suction source and a second drain mechanism. The second suction source may be fluidly coupled with a second array of perforations. The second drain mechanism may be fluidly coupled with and between the second array of perforations and the second suction source.

Aspects of the disclosure are directed to one or more arrays of perforations. An array may be fluidly coupled to a plenum. The plenum may be coupled to a suction source and a drain mechanism.

The nacelle may include an inner barrel axially aligned with and radially within the outer barrel. The inner barrel may include one or more acoustic panels which are fluidly discrete from the active laminar control system.

The drain mechanism may be configured to direct liquid out of the active laminar control system into a cavity within the nacelle. The outer barrel may have a drain aperture, which is configured to direct the liquid from within the cavity out of the nacelle.

According to aspects of the disclosure, a nacelle inlet and an outer barrel are a single monolithic body.

The foregoing features and the operation of the invention will become more apparent in light of the following description and the accompanying drawings.

### BRIEF DESCRIPTION OF THE DRAWINGS

FIG. 1 is a side view illustration of an aircraft propulsion system.
FIG. 2 is a perspective side cutaway illustration of the aircraft propulsion system.
FIG. 3 is a perspective side sectional illustration of a forward portion of a nacelle configured with an active laminar flow control (ALFC) system.
FIG. 4 is a perspective illustration of a nacelle inlet for the aircraft propulsion system.
FIG. 5 is a front view illustration of the nacelle inlet.
FIG. 6 is a side sectional illustration of a forward portion of another nacelle.
FIG. 7 is a block diagram illustration of the forward portion of the nacelle configured with the ALFC system.
FIG. 8 is a side sectional illustration of a portion of an outer barrel of the nacelle.
FIG. 9 is a perspective side cutaway illustration of an embodiment of the forward portion of the nacelle with the ALFC system.
FIG. 10 is a perspective side cutaway illustration of another embodiment of the forward portion of the nacelle with the ALFC system.
FIG. 11 is an illustration of a passive drain mechanism.
FIG. 12 is a block diagram illustration of an active drain mechanism.

### DETAILED DESCRIPTION OF THE INVENTION

The present disclosure includes active laminar flow control (ALFC) systems for an aircraft and, more particularly, an aircraft propulsion system configured with the aircraft. As described below in further detail, these ALFC systems may be susceptible to ingesting / taking-in liquids such as rain water, deicing fluids, etc. while the aircraft is parked, taxiing, taking off or landing at an airport. These ALFC systems may also be susceptible to ingesting / taking-in such liquids while the aircraft is flying below certain altitudes; e.g., below the cloud-line.

It is generally desirable to prevent liquids from pooling or collecting and staying inside of the ALFC system. This collected liquid may interfere with the active laminar flow control system. The collected liquid may prevent proper operation of, or decrease operational efficiency of, the active laminar flow control system. The collected liquid, for example, rain water or condensation, under severe weather conditions may also freeze, expand and thereby deform internal plumbing components (e.g., plenums, conduits, etc.) of the active laminar flow control system.

To prevent or reduce collection of liquid(s), the ALFC systems disclosed below include one or more active drain mechanisms and/or one or more passive drain mechanisms. These drain mechanisms (e.g., valves, flow regulators, etc.) are operable to direct liquid out of the ALFC systems, typically while the ALFC systems are non-operational. The drain mechanisms may then close during at least some modes of ALFC system operation so as to prevent degradation to ALFC system operation and/or efficiency.

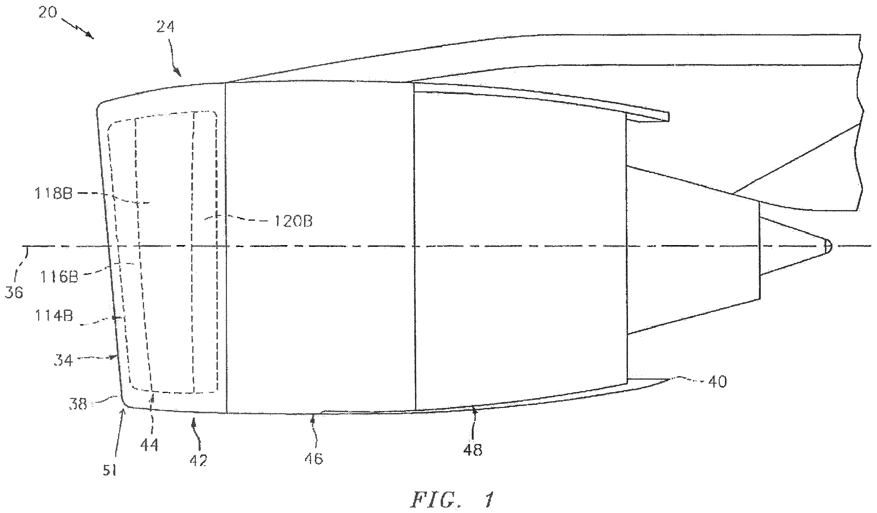

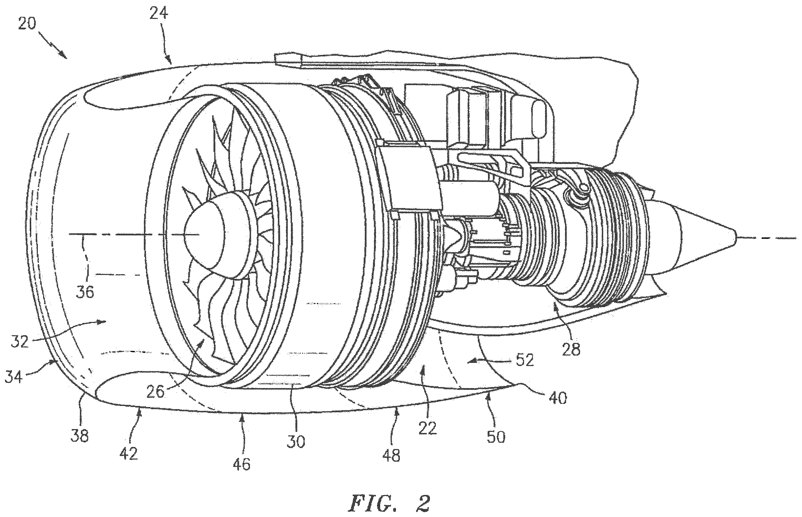

Referring now to FIGS. 1 and 2, an aircraft propulsion system 20 is illustrated that includes a gas turbine engine 22 housed within a nacelle 24. The turbine engine 22 may be configured as a turbofan engine. The turbine engine 22 of FIG. 2, for example, includes a fan 26 and an engine core 28, which may include low and high pressure compressors, a combustor and high and low pressure turbines.

The fan 26 is configured with an array of fan blades. These fan blades are housed within a tubular fan case 30. The fan case 30 is configured to provide an outer boundary for an axial portion of a gas path 32 extending into the propulsion system 20 from an inlet orifice 34 and through the fan 26. The fan case 30 may also be configured to radially contain one or more of the fan blades and/or fan blade fragments where the blade(s) and/or blade fragment(s) are radially ejected from the fan rotor, for example, after collision with a foreign object.

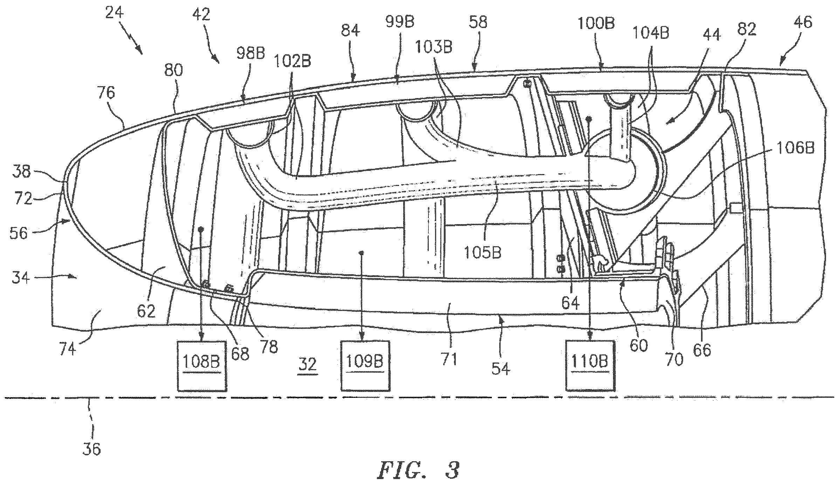

The nacelle 24 extends along an axis 36 between a nacelle forward end 38 and a nacelle aft end 40. The nacelle 24 includes a nacelle inlet 42 configured with an active laminar flow control (ALFC) system 44; see also FIG. 3. The nacelle 24 also includes a fan cowl 46 and an aft nacelle structure 48 which may be configured as a thrust reverser. The components 42, 46 and 48 are arranged sequentially along the axis 36 with the nacelle inlet 42 at the nacelle forward end 38 and with the aft nacelle structure 48 generally at the nacelle aft end 40. The fan cowl 46 is generally axially aligned with the fan 26 and axially overlaps the fan case 30.

The nacelle inlet 42 is configured to direct a stream of air through the inlet orifice 34 and into the turbine engine 22. More particularly, the nacelle inlet 42 is configured to provide a split between (A) air flowing into the gas path 32 through the inlet orifice 34 and (B) air flowing around and outside of the propulsion system 20. The nacelle inlet 42 may also be configured to create and/or maintain laminar flow of the air flowing outside and adjacent to the nacelle 24 as described below in further detail. By promoting and/or extending laminar flow, the nacelle inlet 42 may reduce aerodynamic drag and increase propulsion system 20 efficiency.

Referring to FIGS. 1 and 3-5, the nacelle inlet 42 includes a noselip 51 (see FIG. 1) at the leading edge, a tubular acoustic inner barrel 54, an annular inlet lip 56 (see FIG. 3) and a tubular outer barrel 58, which may or may not be circumferentially interrupted by a pylon (not shown). The inner barrel 54 extends circumferentially around the axis 36. The inner barrel 54 extends axially along the axis 36 between an inner barrel forward end 68 and an inner barrel aft end 70.

The inner barrel 54 may be configured to attenuate noise generated during propulsion system 20 operation and, more particularly for example, noise generated by rotation of the fan 26. The inner barrel 54, for example, may include at least one tubular noise attenuating acoustic panel or an array of arcuate noise attenuating acoustic panels 71 arranged around the axis 36. Each acoustic panel 71 may include a porous (e.g., honeycomb) core bonded between a perforated face sheet and a non-perforated back sheet, where the perforated face sheet faces radially inward and provides an outer boundary for an axial portion of the gas path 32. Each of these acoustic panels 71 may be structurally and/or fluidly discrete from the ALFC system 44. Of course, various other acoustic panel types and configurations are known in the art, and the present disclosure is not limited to any particular ones thereof.

The inlet lip 56 forms a leading edge 72 of the nacelle 24 as well as the inlet orifice 34 to the gas path 32. The inlet lip 56 has a cupped (e.g., a generally U-shaped or V-shaped) cross-sectional geometry which extends circumferentially around the axis 36. The inlet lip 56 includes axially overlapping inner and outer lip portions 74 and 76 as shown in FIG. 3.

The inner lip portion 74 extends axially from the outer lip portion 76 at the nacelle forward end 38 and the inlet orifice 34 to the inner barrel 54. An aft end 78 of the inner lip portion 74 is attached to the inner barrel forward end 68 with, for example, one or more fasteners; e.g., rivets, bolts, etc. The inner lip portion 74 may also or alternatively be bonded (e.g., welded, brazed, adhered, etc.) to the inner barrel 54. Of course, the present disclosure is not limited to any particular attachment techniques between the inlet lip 56 and the inner barrel 54.

The outer lip portion 76 extends axially from the inner lip portion 74 at the nacelle forward end 38 to the outer barrel 58. The outer lip portion 76 and, more particular, the entire inlet lip 56 may be formed integral with the outer barrel 58 as illustrated in FIG. 3. The inlet lip 56 and the outer barrel 58, for example, may be formed from a monolithic outer skin 80 such as, for example, a formed piece of sheet metal or molded composite material; e.g., fiber reinforcement within a polymer matrix. Such a monolithic outer skin 80 may extend longitudinally from the aft end 78 of the inner lip portion 74 to an aft end 82 of the outer barrel 58.

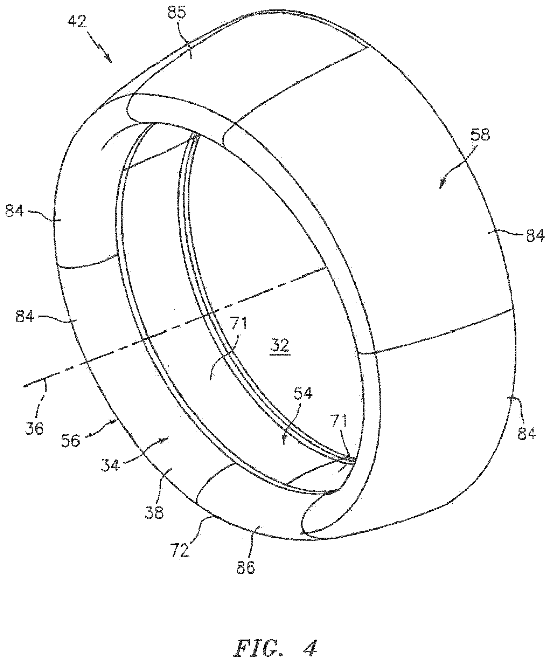

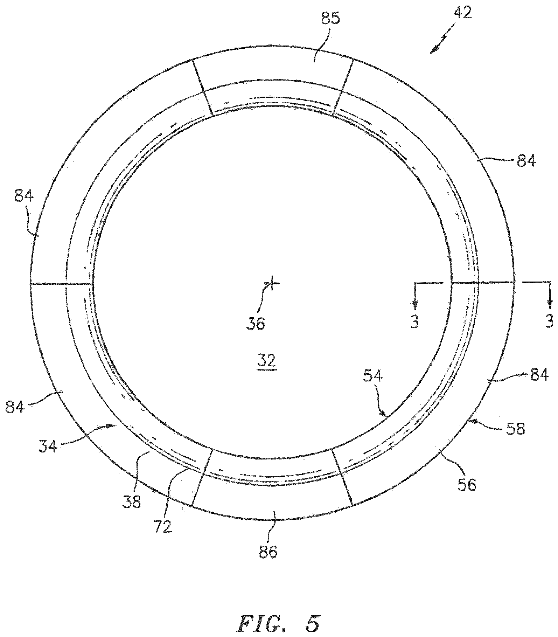

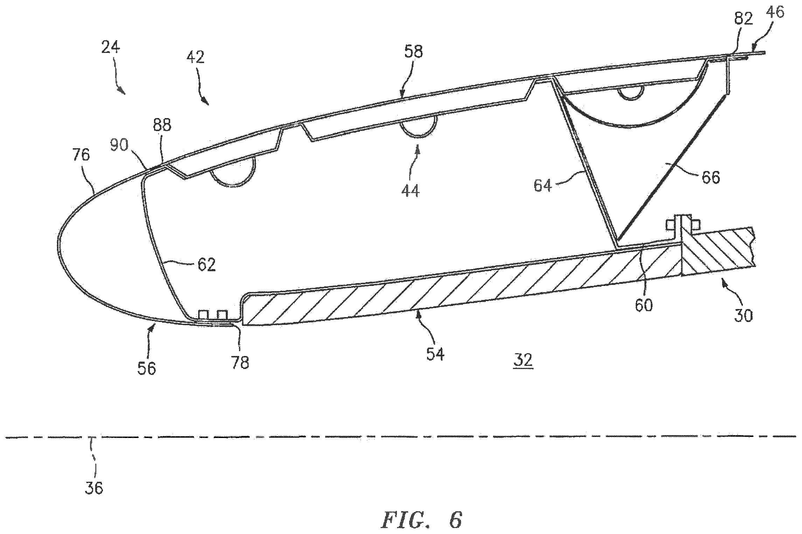

The inlet lip 56 and the outer barrel 58 may be configured as a single monolithic full hoop body. Alternatively, the inlet lip 56 and the outer barrel 58 may be formed from an array of arcuate segments 84-86 that are attached side-to-side circumferentially about the axis 36 as shown in FIGS. 4 and 5. In other embodiments, however, the inlet lip 56 may be formed discrete from the outer barrel 58, as shown in FIG. 6. In such an embodiment, an aft end 88 of the outer lip portion 76 is attached (e.g., mechanically fastened and/or bonded) to a forward end 90 of the outer barrel 58.

Referring again to FIG. 3, the outer barrel 58 extends circumferentially around the axis 36. The outer barrel 58 is generally axially aligned with and circumscribes the inner barrel 54. The outer barrel 58 extends axially along the axis 36 between the inlet lip 56 and, more particularly, the outer lip portion 76 and the outer barrel aft end 82.

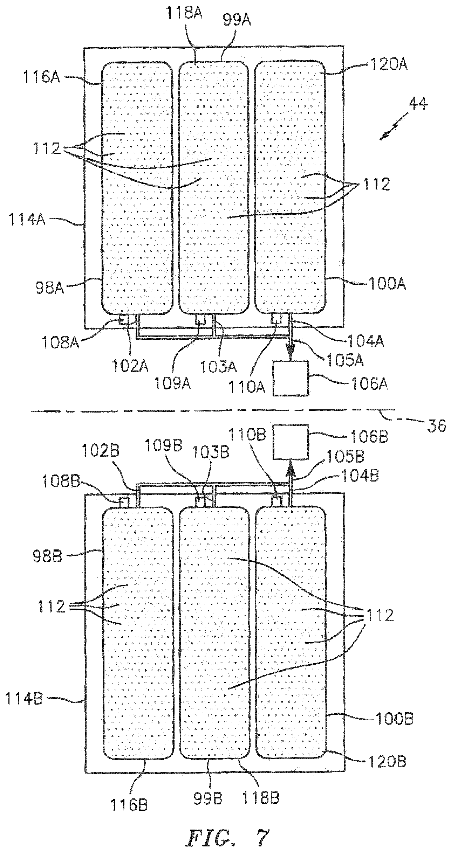

Referring to FIGS. 3 and 7, the active laminar flow control (ALFC) system 44 includes one or more plenums 98A-100A, 98B-100B, one or more conduits 102A-104A, 102B-104B, one or more suction sources 106A, 106B, and one or more drain mechanisms 108A-110A, 108B-110B (shown in block form in FIG. 3). The ALFC system 44 also includes a plurality of perforations 112 in the nacelle 24 and, more particularly for example, in the outer barrel 58.

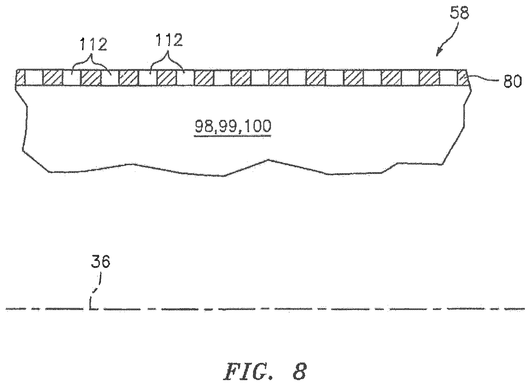

The perforations 112 extend through the outer skin 80 of the outer barrel 58 as shown in FIG. 8. The perforations 108 may be arranged into one or more arrays 114A, 114B as shown in FIG. 1 (see also FIG. 7), where a first of the arrays 114B is on the illustrated front side of the nacelle 24 and a second of the arrays 114A is on the hidden back side of the nacelle 24. The perforations 112 in each of these arrays 114A and 114B may be further arranged into one or more subarrays. Each array 114A, 114B of perforations 112 in FIGS. 1 and 7, for example, includes a forward subarray 116A, 116B of perforations 112, an intermediate subarray 118A, 118B of perforations 112 and an aft subarray 120A, 120B of perforations 112.

Referring to FIGS. 3 and 7, each of the plenums 98A-100A, 98B-100B may be configured as a duct with, for example, one side thereof configured as a respective portion of the perforated outer skin 80. Each of the plenums 98A-100A, 98B-100B is thereby fluidly coupled with a plurality of the perforations 112 (see FIG. 8) in the outer barrel 58. In particular, the first plenums 98A, 98B are fluidly coupled with the forward subarrays 116A, 116B, respectively, of perforations 112. The second plenums 99A, 99B are fluidly coupled with the intermediate subarrays 118A, 118B, respectively, of perforations 112. The third plenums 100A, 100B are fluidly coupled with the aft subarrays 120A, 120B, respectively, of perforations 112. Referring to FIG. 3, the first and the second plenums 98A and 99A, 98B and 99B are located axially between a forward bulkhead 62 and an aft bulkhead 64, with the first plenum 98A, 98B axially forward of the second plenum 99A, 99B. The third plenum 100A, 100B is located axially between the aft bulkhead 64 and the aft end 82.

Referring to FIG. 7, the plenums 98A-100A, 98B-100B are respectively fluidly coupled with the suction sources 106A, 106B through the conduits 102A-104A, 102B-104B; e.g., ducts. Each suction source 106A, 106B may be configured as a pump or a vacuum with an electric motor; e.g., an electric pump. However, the suction sources 106A and 106B are not limited to the foregoing exemplary embodiments. Each suction source 106A, 106B is operable to draw boundary layer air flowing along the outer barrel 58 into the ALFC system 44 so as to actively promote laminar flow adjacent the nacelle 24. More particularly, each suction source 106A, 106B is configured to draw boundary layer air flowing along the outer barrel 58 into the plenums through the array 114A, 114B of perforations 112. The air within the plenums 98A-100A, 98B-100B is then drawn into the suction source 106A, 106B through the conduits 102A-104A, 102B-104B, and is discharged from the suction source 106A, 106B through at least one outlet.

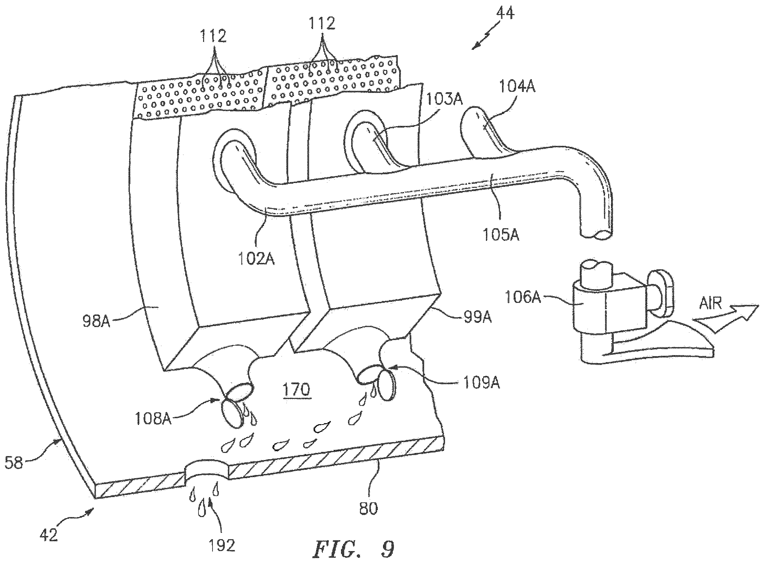

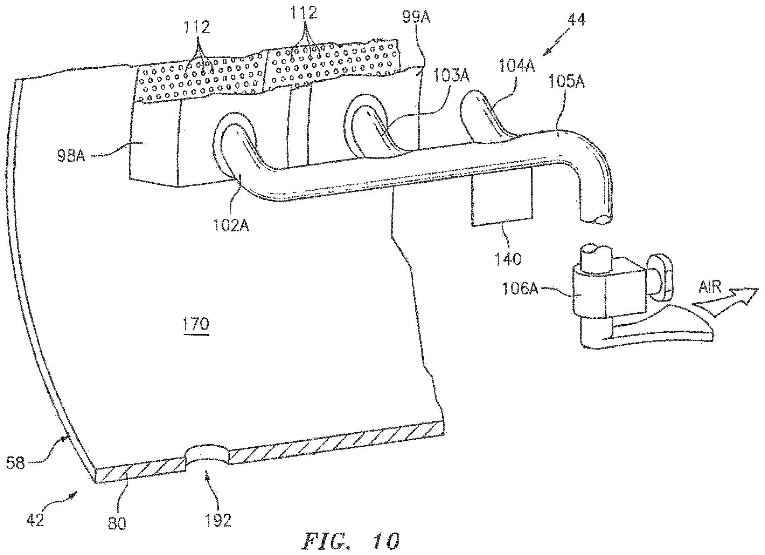

The drain mechanisms 108A-110A, 108B-110B are respectively fluidly coupled with and between the perforations 112 and the suction sources 106A, 106B. In the embodiment of FIG. 7, for example, the each of the drain mechanisms 108A-110A, 108B-110B is configured with a respective one of the plenums 98A-100A, 98B-100B; see also FIG. 9. In addition or alternatively, a manifold conduit 105A, 105B for the respective conduits 102A-104A, 102B-104B (or one or more of these conduits) may be configured with a respective drain mechanisms 140 as illustrated in FIG. 10.

Under certain conditions, liquid such as rain water, anti-ice fluid, etc. may contact the exterior surface of the outer barrel 58. Some of this liquid (hereinafter referred to as "rain water" of ease of description) may travel through the perforations 112 and into one or more of the plenums 98A-100A, 98B-100B. In order to prevent accumulation of such rain water within the ALFC system 44, the drain mechanisms 108A-110A, 108B-110B may be located at gravitational low points in the ALFC system 44 and configured to selectively direct the rain water out of the ALFC system 44. More particularly, each of the drain mechanisms 108A-110A, 108B-110B is configured to open (and may remain open) while the ALFC system 44 and, more particularly, the suction sources 106A, 106B are non-operational. Each of the drain mechanisms 108A-110A, 108B-110B is also configured to close (and may remain closed) while the ALFC system 44 and, more particularly, the suction sources 106A, 106B are operational.

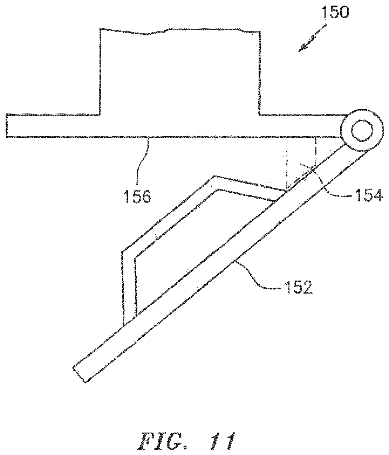

Referring to FIG. 11, one or more of the drain mechanisms 108A-110A, 108B-110B (see FIG. 7) may be configured as a passive drain mechanism 150. This drain mechanism 150 may be configured as a flapper valve, for example. The drain mechanism 150 includes a flap 152, which is adapted to open and remain open while there is no or relatively low suction / vacuum within the ALFC system 44; e.g., when its respective suction source is non-operational, just started, or just turned off. The drain mechanism 150 may also include a biasing device 154 (e.g., a spring) configured to bias the flap 152 open. However, when the suction source generates suction / vacuum above a certain (e.g., "activation") threshold within the ALFC system 44 (less than the typical operational suction level), the pressure differential across the opening 156 in the drain mechanism 150 may cause the flap 152 to swing closed and remain closed. Of course, the ALFC system 44 may also or alternatively be configured with various other types of passive drain mechanisms (e.g., passive valves) other than the drain mechanism 150 described above.

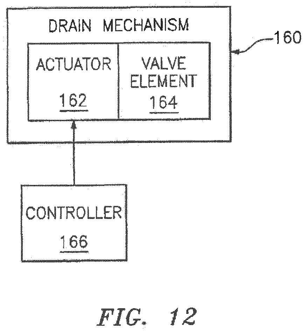

Referring to FIG. 12, one or more of the drain mechanisms 108A-110A, 108B-110B (see FIG. 7) may alternatively be configured as an active drain mechanism 160. This drain mechanism 160 may be configured as an electronically actuated drain valve, for example. The drain mechanism 160 may include an actuator 162 (e.g., an electric motor) configured to open and close a valve element 164 in response to receiving control signals from a controller 166. This controller 166 may be configured to synchronize the opening and closing of the drain mechanism 160 with operation of the ALFC system 44 and, more particularly, the operation of a respective one of the suction devices. For example, the controller 166 may signal the actuator 162 to close the valve element 164 about when (e.g., just before, exactly when or just after) the suction device is turned on. The controller 166 may then signal the actuator 162 to open the valve element 166 about when (e.g., just before, exactly when or just after) the suction device is turned off. The controller 166, of course, may also be configured to signal the actuator 162 to open or close the valve element 166 during other select times of operation. Furthermore, the ALFC system 44 may also or alternatively be configured with various other types of active drain mechanisms (e.g., actives valves) other than the drain mechanism 160 described above.

Referring again to FIG. 9, one or more of the drain mechanisms (e.g., 108A and 109A in FIG. 9) may direct the rain water out of the ALFC system 44 into an interior cavity 170, chamber or plenum in the nacelle inlet 42. This rain water may then drain out of the nacelle inlet 42 through a drainage aperture 192 in the outer barrel 58, which aperture 192 may be located at a gravitational low point of the outer barrel. Such a drainage aperture 192 may also drain liquid (e.g., rain water) which is directed into the cavity 170 from one or more of the acoustic panels 71 in the inner barrel 54 (see FIG. 3). Alternatively, the acoustic panels 71 may be configured with one or more other discrete drainage apertures.

The ALFC system 44 of the present disclosure, of course, is not limited to the exemplary configurations described above. For example, the ALFC system 44 may be configured with a single suction source, or additional suction sources; e.g., one for each plenum. The ALFC system 44 may be configured with additional plenums, or one or more of the plenums described above may be omitted. One or more of the plenums as well as one or more of the conduits may be configured with its own drain mechanism or multiple drain mechanisms. The inlet nacelle may be configured as a generally unitary structure, or alternatively configured with opposing "gull-wing" door structures. One or more sets of the plenums 98A-B, 99A-B, 100A-B may be fluidly coupled and/or integrated into a single circumferentially extending plenum. Such a plenum may extend, for example, between one-hundred and eighty degrees (180°) to completely around the axis 36. Of course, various other ALFC system 44 configurations may be implemented with the nacelle inlet 42 of the present disclosure.

While various embodiments of the present invention have been disclosed, it will be apparent to those of ordinary skill in the art that many more embodiments and implementations are possible within the scope of the invention. For example, the present invention as described herein includes several aspects and embodiments that include particular features. Although these features may be described individually, some or all of these features may be combined with any one of the aspects. Accordingly, the present invention is not to be restricted except in light of the attached claims.

## Claims

1. A nacelle (24) for an aircraft propulsion system (20), comprising:
an outer barrel (58); and
an active laminar flow control system (44) including an array of perforations (112) in the outer barrel (58), a suction source (106A, 106B) and a drain mechanism,;
wherein the suction source (106A, 106B) is fluidly coupled with the array of perforations (112); and
wherein the drain mechanism (108A-110A, 108B-110B) is fluidly coupled with and between the array of perforations (112) and the suction source (106A-106B), and **characterized in that** the drain mechanism (108A-110A, 108B-110B) is configured to close and remain closed while the suction source is operational
and to open and remain open while the suction source (106A, 106B) is non-operational

2. The nacelle of claim 1, wherein the drain mechanism (108A-110A, 108B-110B) is a passive drain mechanism, or wherein the drain mechanism (108A-110A, 108B-110B) is an active drain mechanism.

3. The nacelle of claim 1 or 2, wherein the drain mechanism (108A-110A, 108B-110B) comprises a flapper valve, and optionally wherein the flapper valve includes a flap and a biasing device configured to bias the flap in an open position.

4. The nacelle of any preceding claim, wherein the drain mechanism (108A-110A, 108B-110B) is electronically synchronized with the suction source (106A, 106B) such that the drain mechanism (108A-110A, 108B-110B) is open while the suction source (106A, 106B) is non-operational and such that the drain mechanism (108A-110A, 108B-110B) is closed while the suction source (106A, 106B) is operational.

5. The nacelle of any preceding claim, wherein
the active laminar control system (44) further includes a plenum (98A, 99A) and a conduit (102A, 103A);
the plenum (98A, 99A) is configured with the outer barrel (58) and is fluidly coupled with the array of perforations (112);
the conduit (102A, 103A) fluidly couples the plenum (98A, 99A) with the suction source (106A, 106B); and
the drain mechanism is configured with the plenum (98A, 99A), or the drain mechanism is configured with the conduit (102A, 103A).

6. The nacelle of any preceding claim, wherein
the active laminar control system (44) further includes a second array of perforations in the outer barrel (58) which are fluidly coupled with the suction source (106A); and
the drain mechanism is fluidly coupled with and between the second array of perforations and the suction source (106B).

7. The nacelle of claim 1, wherein
the active laminar control system further includes a second array of perforations in the outer barrel (58), a second suction source (106B) and a second drain mechanism (108B-110B);
the second suction source (106B) is fluidly coupled with second array of perforations; and
the second drain mechanism (108B-110B) is fluidly coupled with and between the second array of perforations and the second suction source (106B).

8. The nacelle of any preceding claim, further comprising an inner barrel (54) axially aligned with and radially within the outer barrel (58), wherein the inner barrel (54) includes one or more acoustic panels which are fluidly discrete from the active laminar control system (44).

9. The nacelle of any preceding claim, wherein the drain mechanism (108A-110A, 108B-110B) is configured to direct liquid out of the active laminar control system (44) into a cavity (170) within the nacelle, and the outer barrel has a drain aperture which is configured to direct the liquid from within the cavity out of the nacelle (24).

10. The nacelle (24) of claim 1, comprising:
a nacelle inlet (42) including an inner barrel (54) and said outer barrel (58) circumscribing the inner barrel (54), the inner barrel (54) including a sound attenuating acoustic panel; and
said active laminar flow control system (44) including a plurality of said arrays of perforations (112) in the outer barrel (58);
wherein the suction source (106A, 106B) is fluidly coupled with the arrays of perforations (112); and
wherein the drain mechanism (108A-110A, 108B-110B) is fluidly coupled with and between at least one of the arrays of perforations (112) and the suction source (106a, 106B).

11. The nacelle of claim 10, wherein the drain mechanism (108A-110A, 108B-110B) is fluidly coupled with and between each of the arrays of perforations (112) and the suction source (106A, 106B).

12. The nacelle of claim 10, wherein the drain mechanism (108A-110A, 108B-110B) comprises a passive drain mechanism, or wherein the drain mechanism (108A-110A, 108B-110B) comprises an active drain mechanism which is actuated based on the operation of the suction source (106A, 106B).

13. The nacelle of any of claims 9 to 12, wherein the nacelle inlet (42) and the outer barrel (58) are a single monolithic body.

14. The nacelle (24) of claim 1, comprising:
a nacelle inlet (42) including an inner barrel (54) and said outer barrel (58) circumscribing the inner barrel (54), the inner barrel (54) including a sound attenuating acoustic panel; and
said active laminar flow control system (44) further including a controller;
wherein the controller (166) is configured to synchronize actuation of the drain mechanism (108A-110A, 108B-110B) with operation of the suction source (106A, 106B).

## Patentansprüche

1. Gondel (24) für ein Luftfahrzeugantriebssystem (20), umfassend:
einen Außenmantel (58); und
ein aktives Laminarströmungssteuerungssystem (44), das eine Anordnung von Perforationen (112) in dem Außenmantel (58), eine Saugquelle (106A, 106B) und einen Entleerungsmechanismus enthält;
wobei die Saugquelle (106A, 106B) fluidisch mit der Anordnung von Perforationen (112) gekoppelt ist; und
wobei der Entleerungsmechanismus (108A-110A, 108B-110B) fluidisch mit und zwischen der Anordnung von Perforationen (112) und der Saugquelle (106A-106B) gekoppelt ist und **dadurch gekennzeichnet ist, dass** der Entleerungsmechanismus (108A-110A, 108B-110B) dazu konfiguriert ist, sich zu schließen und geschlossen zu bleiben, während die Saugquelle betriebsfähig ist, und sich zu öffnen und geöffnet zu bleiben, während die Saugquelle (106A, 106B) nicht betriebsfähig ist.

2. Gondel nach Anspruch 1, wobei der Entleerungsmechanismus (108A-110A, 108B-110B) ein passiver Entleerungsmechanismus ist oder wobei der Entleerungsmechanismus (108A-110A, 108B-110B) ein aktiver Entleerungsmechanismus ist.

3. Gondel nach Anspruch 1 oder 2, wobei der Entleerungsmechanismus (108A-110A, 108B-110B) ein Klappenventil umfasst, und wobei das Klappenventil gegebenenfalls eine Klappe und eine Vorspannvorrichtung beinhaltet, die dazu konfiguriert ist, die Klappe in einer offenen Position vorzuspannen.

4. Gondel nach einem der vorhergehenden Ansprüche, wobei der Entleerungsmechanismus (108A-110A, 108B-110B) mit der Saugquelle (106A, 106B) elektronisch synchronisiert ist, sodass der Entleerungsmechanismus (108A-110A, 108B-110B) offen ist, während die Saugquelle (106A, 106B) nicht betriebsfähig ist, und sodass der Entleerungsmechanismus (108A-110A, 108B-110B) geschlossen ist, während die Saugquelle (106A, 106B) betriebsfähig ist.

5. Gondel nach einem der vorhergehenden Ansprüche, wobei
das aktive Laminarströmungssteuerungssystem (44) ferner eine Kammer (98A, 99A) und eine Leitung (102A, 103A) beinhaltet;
die Kammer (98A, 99A) mit dem Außenmantel (58) konfiguriert ist und fluidisch mit der Anordnung von Perforationen (112) gekoppelt ist;
die Leitung (102A, 103A) die Kammer (98A, 99A) fluidisch mit der Saugquelle (106A, 106B) koppelt; und
der Entleerungsmechanismus mit der Kammer (98A, 99A) konfiguriert ist oder der Entleerungsmechanismus mit der Leitung (102A, 103A) konfiguriert ist.

6. Gondel nach einem der vorhergehenden Ansprüche, wobei
das aktive Laminarströmungssteuerungssystem (44) ferner eine zweite Anordnung von Perforationen in dem Außenmantel (58) beinhaltet, der fluidisch mit der Saugquelle (106A) gekoppelt ist; und
der Entleerungsmechanismus fluidisch mit und zwischen der zweiten Anordnung von Perforationen und der Saugquelle (106B) gekoppelt ist.

7. Gondel nach Anspruch 1, wobei
das aktive Laminarströmungssteuerungssystem ferner eine zweite Anordnung von Perforationen in dem Außenmantel (58), eine zweite Saugquelle (106B) und einen zweiten Entleerungsmechanismus (108B-110B) beinhaltet;
die zweite Saugquelle (106B) fluidisch mit der zweiten Anordnung von Perforationen gekoppelt ist; und
der zweite Entleerungsmechanismus (108B-110B) fluidisch mit und zwischen der zweiten Anordnung von Perforationen und der zweiten Saugquelle (106B) gekoppelt ist.

8. Gondel nach einem der vorhergehenden Ansprüche, ferner umfassend einen Innenmantel (54), der axial mit und radial innerhalb des Außenmantels (58) angeordnet ist, wobei der Innenmantel (54) ein oder mehrere Akustikplatten beinhaltet, die fluidisch getrennt vom aktiven Laminarströmungssteuerungssystem (44) sind.

9. Gondel nach einem der vorhergehenden Ansprüche, wobei der Entleerungsmechanismus (108A-110A, 108B-110B) dazu konfiguriert ist, Flüssigkeit aus dem aktiven Laminarströmungssteuerungssystem (44) in einen Hohlraum (170) innerhalb der Gondel zu leiten, und der Außenmantel eine Entleerungsöffnung hat, die dazu konfiguriert ist, die Flüssigkeit von innerhalb des Hohlraums aus der Gondel (24) zu leiten.

10. Gondel (24) nach Anspruch 1, umfassend:
einen Gondeleinlass (42), der einen Innenmantel (54) und den Außenmantel (58) beinhaltet, der den Innenmantel (54) umgrenzt, wobei der Innenmantel (54) eine schalldämpfende Akustikplatte beinhaltet; und
das aktive Laminarströmungssteuerungssystem (44), das eine Vielzahl der Anordnungen von Perforationen (112) in dem Außenmantel (58) beinhaltet;
wobei die Saugquelle (106A, 106B) fluidisch mit den Anordnungen von Perforationen (112) gekoppelt ist; und
wobei der Entleerungsmechanismus (108A-110A, 108B-110B) fluidisch mit und zwischen mindestens einer der Anordnungen von Perforationen (112) und der Saugquelle (106A, 106B) gekoppelt ist.

11. Gondel nach Anspruch 10, wobei der Entleerungsmechanismus (108A-110A, 108B-110B) fluidisch mit und zwischen jeder der Anordnungen von Perforationen (112) und der Saugquelle (106A, 106B) gekoppelt ist.

12. Gondel nach Anspruch 10, wobei der Entleerungsmechanismus (108A-110A, 108B-110B) einen passiven Entleerungsmechanismus umfasst oder wobei der Entleerungsmechanismus (108A-110A, 108B-110B) einen aktiven Entleerungsmechanismus umfasst, der auf Grundlage des Betriebs der Saugquelle (106A, 106B) betätigt wird.

13. Gondel nach einem der Ansprüche 9 bis 12, wobei der Gondeleinlass (42) und der Außenmantel (58) ein einziger monolithischer Körper sind.

14. Gondel (24) nach Anspruch 1, umfassend:
einen Gondeleinlass (42), der einen Innenmantel (54) und den Außenmantel (58) beinhaltet, welcher den Innenmantel (54) umgrenzt, wobei der Innenmantel (54) eine schalldämpfende Akustikplatte beinhaltet; und
das aktive Laminarströmungssteuerungssystem (44) ferner eine Steuerung beinhaltet;
wobei die Steuerung (166) dazu konfiguriert ist, die Betätigung des Entleerungsmechanismus (108A-110A, 108B-110B) mit dem Betrieb der Saugquelle (106A, 106B) zu synchronisieren.

## Revendications

1. Nacelle (24) pour un système de propulsion d'aéronef (20), comprenant :
un cylindre extérieur (58) ; et
un système de contrôle de flux laminaire actif (44) incluant une matrice de perforations (112) dans le cylindre extérieur (58), une source d'aspiration (106A, 106B) et un mécanisme de drainage ;
dans laquelle la source d'aspiration (106A, 106B) est fluidiquement couplée avec la matrice de perforations (112) ; et
dans laquelle le mécanisme de drainage (108A-110A, 108B-110B) est fluidiquement couplé avec et entre la matrice de perforations (112) et la source d'aspiration (106A-106B), et **caractérisée en ce que** le mécanisme de drainage (108A-110A, 108B-110B) est configuré pour se fermer et rester fermé lorsque la source d'aspiration est opérationnelle, et pour s'ouvrir et rester ouvert lorsque la source d'aspiration (106A, 106B) n'est pas opérationnelle.

2. Nacelle selon la revendication 1, dans laquelle le mécanisme de drainage (108A-110A, 108B-110B) est un mécanisme de drainage passif, ou dans laquelle le mécanisme de drainage (108A-110A, 108B-110B) est un mécanisme de drainage actif.

3. Nacelle selon la revendication 1 ou 2, dans laquelle le mécanisme de drainage (108A-110A, 108B-110B) comprend une soupape à clapet, et éventuellement dans laquelle la soupape à clapet inclut un clapet et un dispositif de sollicitation configuré pour solliciter le clapet dans une position ouverte.

4. Nacelle selon une quelconque revendication précédente, dans laquelle le mécanisme de drainage (108A-110A, 108B-110B) est électroniquement synchronisé avec la source d'aspiration (106A, 106B) de sorte que le mécanisme de drainage (108A-110A, 108B-110B) est ouvert lorsque la source d'aspiration (106A, 106B) n'est pas opérationnelle et de sorte que le mécanisme de drainage (108A-110A, 108B-110B) est fermé lorsque la source d'aspiration (106A, 106B) est opérationnelle.

5. Nacelle selon une quelconque revendication précédente, dans laquelle
le système de contrôle laminaire actif (44) comprend en outre un plénum (98A, 99A) et une conduite (102A, 103A) ;
le plénum (98A, 99A) est configuré avec le cylindre extérieur (58) et est fluidiquement couplé avec la matrice de perforations (112) ;
la conduite (102A, 103A) couple fluidiquement le plénum (98A, 99A) à la source d'aspiration (106A, 106B) ; et
le mécanisme de drainage est configuré avec le plénum (98A, 99A), ou le mécanisme de drainage est configuré avec la conduite (102A, 103A).

6. Nacelle selon une quelconque revendication précédente, dans laquelle
le système de contrôle laminaire actif (44) comprend en outre une seconde matrice de perforations dans le cylindre extérieur (58) qui sont fluidiquement couplées à la source d'aspiration (106A) ; et
le mécanisme de drainage est fluidiquement couplé avec et entre la seconde matrice de perforations et la source d'aspiration (106B).

7. Nacelle selon la revendication 1, dans laquelle
le système de contrôle laminaire actif comprend en outre une seconde matrice de perforations dans le cylindre extérieur (58), une seconde source d'aspiration (106B) et un second mécanisme de drainage (108B-110B) ;
la seconde source d'aspiration (106B) est fluidiquement couplée à la seconde matrice de perforations ; et
le second mécanisme de drainage (108B-110B) est fluidiquement couplé avec et entre la seconde matrice de perforations et la seconde source d'aspiration (106B).

8. Nacelle selon une quelconque revendication précédente, comprenant en outre un cylindre intérieur (54) axialement aligné avec et radialement à l'intérieur du cylindre extérieur (58), dans laquelle le cylindre intérieur (54) inclut un ou plusieurs panneaux acoustiques qui sont fluidiquement séparés du système de contrôle laminaire actif (44).

9. Nacelle selon une quelconque revendication précédente, dans laquelle le mécanisme de drainage (108A-110A, 108B-110B) est configuré pour diriger le liquide hors du système de contrôle laminaire actif (44) dans une cavité (170) à l'intérieur de la nacelle, et le cylindre extérieur présente une ouverture de drainage qui est configurée pour diriger le liquide depuis l'intérieur de la cavité hors de la nacelle (24).

10. Nacelle (24) selon la revendication 1, comprenant :
une entrée de nacelle (42) incluant un cylindre intérieur (54) et ledit cylindre extérieur (58) circonscrivant le cylindre intérieur (54), le cylindre intérieur (54) incluant un panneau acoustique atténuateur de bruit ; et
ledit système de contrôle de flux laminaire actif (44) incluant une pluralité desdites matrices de perforations (112) dans le cylindre extérieur (58) ;
dans laquelle la source d'aspiration (106A, 106B) est fluidiquement couplée aux matrices de perforations (112) ; et
dans laquelle le mécanisme de drainage (108A-110A, 108B-110B) est fluidiquement couplé avec et entre au moins l'une des matrices de perforations (112) et la source d'aspiration (106A, 106B).

11. Nacelle selon la revendication 10,
dans laquelle le mécanisme de drainage (108A-110A, 108B-110B) est fluidiquement couplé avec et entre chacune des matrices de perforations (112) et la source d'aspiration (106A, 106B).

12. Nacelle selon la revendication 10, dans laquelle le mécanisme de drainage (108A-110A, 108B-110B) comprend un mécanisme de drainage passif, ou dans laquelle le mécanisme de drainage (108A-110A, 108B-110B) comprend un mécanisme de drainage actif qui est actionné sur la base du fonctionnement de la source d'aspiration (106A, 106B).

13. Nacelle selon l'une quelconque des revendications 9 à 12, dans laquelle l'entrée de nacelle (42) et le cylindre extérieur (58) forment un seul corps monolithique.

14. Nacelle (24) selon la revendication 1, comprenant :
une entrée de nacelle (42) incluant un cylindre intérieur (54) et ledit cylindre extérieur (58) circonscrivant le cylindre intérieur (54), le cylindre intérieur (54) incluant un panneau acoustique atténuateur de bruit ; et
ledit système de contrôle de flux laminaire actif (44) incluant en outre un dispositif de commande ;
dans laquelle le dispositif de commande (166) est configuré pour synchroniser l'actionnement du mécanisme de drainage (108A-110A, 108B-110B) avec le fonctionnement de la source d'aspiration (106A, 106B).
